# EUROPÄISCHE PATENTSCHRIFT

(11) **EP 1 960 635 B1**
(45) Veröffentlichungstag und Bekanntmachung des Hinweises auf die Patenterteilung: **19.11.2014**
(21) Anmeldenummer: 06829643.3
(22) Anmeldetag: 15.12.2006
(51) Int. Cl.: F01C 9/00, F01C 11/00, F01C 13/00, F02B 53/14

(54) **HYBRIDE SCHWENKKOLBENMASCHINE MIT EINEM VERBRENNUNGSMOTORTEIL UND EINEM ELEKTROMOTORISCHEN TEIL**
HYBRID OSCILLATING PISTON ENGINE COMPRISING AN INTERNAL COMBUSTION ENGINE PART AND AN ELECTROMOTIVE PART
MACHINE HYBRIDE A PISTONS ROTATIFS POURVU D'UNE PARTIE MOTEUR A COMBUSTION INTERNE ET D'UNE PARTIE MOTEUR ELECTRIQUE

(30) Priorität: 16.12.2005 DE 102005062529
(43) Veröffentlichungstag der Anmeldung: 27.08.2008
(73) Patentinhaber: HÜTTLIN, Herbert, 79539 Lörrach (DE)
(72) Erfinder: HÜTTLIN, Herbert, 79539 Lörrach (DE)
(74) Vertreter: Heuckeroth, Volker
(86) Internationale Anmeldenummer: PCT/EP2006/012093
(87) Internationale Veröffentlichungsnummer: WO 2007/073883

(56) Entgegenhaltungen:
- WO-A-03/067033
- FR-A- 2 322 282
- US-A1- 5 988 307
- US-A1- 2005 135 950
- US-A1- 2005 224 263
- DATABASE WPI Week 200528 Derwent Publications Ltd., London, GB; AN 2005-270687 XP002425961 -& RU 2 237 817 C1 (ISACHKIN A F) 10. Oktober 2004 (2004-10-10)

## Beschreibung

Die Erfindung betrifft eine Schwenkkolbenmaschine, mit einem Verbrennungsmotorteil, der ein Gehäuse aufweist, in dem ein erster und zumindest ein zweiter Kolben angeordnet sind, die gemeinsam in dem Gehäuse um eine gehäusefeste Drehachse umlaufen können, und die beim Umlaufen um die Drehachse um eine senkrecht zur Drehachse verlaufende Schwenkachse zueinander gegensinnige hin- und hergehende Schwenkbewegungen ausführen, wobei der erste Kolben eine erste Endfläche und der zumindest zweite Kolben eine der ersten Endfläche zugewandte zweite Endfläche aufweist, wobei die Endflächen in Schwenkrichtung der Kolben eine Arbeitskammer begrenzen, wobei der Verbrennungsmotorteil zumindest einen dritten und vierten verschwenkbaren Kolben aufweist, die um die Drehachse umlaufen können und eine zweite Arbeitskammer bilden.

Eine derartige Schwenkkolbenmaschine ist aus dem Dokument WO 03/067033 A1 bekannt.

Schwenkkolbenmaschinen und insbesondere eine Schwenkkolbenmaschine gemäß der vorliegenden Erfindung können als Brennkraftmaschinen (Verbrennungsmotoren) verwendet werden. Eine Schwenkkolbenmaschine gemäß der vorliegenden Erfindung wird vorzugsweise als Antriebsmotor für ein Kraftfahrzeug verwendet.

Im Fall der Verwendung der Schwenkkolbenmaschine als Verbrennungsmotor werden die einzelnen Arbeitstakte des Einlassens, Verdichtens, Zündens des Verbrennungsgemisches und des Expandierens und Ausstoßens des verbrannten Verbrennungsgemisches durch hin- und hergehende Schwenkbewegungen der einzelnen Kolben zwischen zwei Endstellungen und durch die entsprechende periodische Änderung des Volumens der Arbeitskammer vermittelt.

Ferner sind sogenannte Hybridantriebe bekannt. Ein Hybridantrieb ist üblicherweise eine Kombination aus Verbrennungsmotor und Elektromotor. Derartige Hybridantriebe, die heutzutage zunehmend an Bedeutung gewinnen, haben den Vorteil, dass beispielsweise im Stadtverkehr der schadstofffreie Elektroantrieb genutzt werden kann, während im Überlandverkehr und auf Autobahnen der Verbrennungsmotor genutzt wird.

Die bekannten Hybridantriebe basieren jedoch auf Verbrennungsmotoren, die als Hubkolbenmotoren mit linear beweglichen Kolben ausgebildet sind, wobei die Kolben beispielsweise in Reihe oder in V-Form angeordnet sind. In Kombination mit einem elektromotorischen Teil baut ein derartiger bekannter Hybrid-Antrieb sehr raumergreifend und besitzt ein hohes Gewicht.

US 2005/0224263 A1 offenbart einen Hybridantrieb mit einer Drehkolbenmaschine als Verbrennungsmotorteil und mit einem elektromotorischen Teil, wobei der Verbrennungsmotorteil ein Gehäuseteil aufweist, und der elektromotorische Teil in einem sich an das Gehäuseteil des Verbrennungsmotorteils anschließenden Gehäuseteil angeordnet ist.

RU 2237817 C1 offenbart einen Hybridantrieb mit einer Rotationskolbenmaschine als Verbrennungsmotor und einem elektromotorischen Teil, wobei der Verbrennungsmotorteil und der elektromotorische Teil entlang einer gemeinsamen Drehwelle angeordnet sind.

Ein weiterer Hybridantrieb mit einem linearen Hubkolbenmotor als Verbrennungsmotorteil ist aus US 5 988 307 A bekannt.

US 2005/0135950 A1 offenbart eine Schwenkkolbenmaschine als Verbrennungsmotor, jedoch ohne elektromotorischen Teil. Ebenfalls eine Rotationskolbenmaschine ohne elektromotorischen Teil offenbart FR 2 322 282 A.

Der Erfindung liegt die Aufgabe zugrunde, eine Schwenkkolbenmaschine der eingangs genannten Art dahingehend weiterzubilden, dass mit ihr auch die Vorteile eines

Hybrid-Antriebs genutzt werden können, ohne dass die Nachteile bekannter HybridAntriebe hinsichtlich der Baugröße und des Baugewichts auftreten.

Erfindungsgemäß wird diese Aufgabe hinsichtlich der eingangs genannten Schwenkkolbenmaschine dadurch gelöst, dass sich an den Verbrennungsmotorteil in Richtung der Drehachse ein elektromotorischer Teil anschließt, der zumindest einen Rotor aufweist, der konzentrisch zur Drehachse angeordnet ist, und der in einem sich an das Gehäuseteil des Verbrennungsmotorteils anschließenden Gehäuseteil angeordnet ist, und dass der zumindest dritte und vierte Kolben in Richtung der Drehachse auf einer dem ersten und zweiten Kolben gegenüberliegenden Seite des elektromotorischen Teils angeordnet sind und um eine zweite Schwenkachse verschwenkbar sind.

Mit der erfindungsgemäßen Schwenkkolbenmaschine wird somit ein Hybrid-Antrieb geschaffen, der im Unterschied zu den bekannten Hybrid-Antrieben einen wesentlich geringeren Bauraum erfordert, weil die zumindest zwei Kolben und der zumindest eine Rotor des elektromotorischen Teils um dieselbe Drehachse umlaufen, so dass der Verbrennungsmotorteil mit den zumindest zwei Kolben und der elektromotorische Teil mit dem zumindest einen Rotor in einem kompakten Gehäuse untergebracht werden können, das sich aus den beiden Gehäuseteilen des Verbrennungsmotorteils und des elektromotorischen Teils zusammensetzt. Die beiden Gehäuseteile können mit ihren "Offenseiten" vorzugsweise mittelbar aneinander geflanscht sein. Bei den herkömmlichen Hybrid-Antrieben, deren Verbrennungsmotorteil ein Hubkolbenmotor mit linear beweglichen Kolben aufweist, ist eine derartige kompakte Anordnung der beiden Antriebsteile dagegen nicht möglich, weil die lineare Kolbenbewegung und die rotierende Bewegung des elektromotorischen Teils wesensunterschiedliche Gehäusegeometrien erfordern.

Die erfindungsgemäße Schwenkkolbenmaschine ermöglicht eine umweltfreundliche Nutzung, indem beispielsweise im Stadtverkehr der Antrieb durch den elektromotorischen Teil und bei Überland- oder Autobahnfahrten durch den Verbrennungsmotorteil bewerkstelligt wird.

Der Verbrennungsmotorteil weist zumindest einen dritten und vierten verschwenkbaren Kolben auf, die um die Drehachse umlaufen können und eine zweite Arbeitskammer bilden.

Diese Maßnahme hat den Vorteil, dass der Verbrennungsmotorteil eine höhere Gesamtleistung bereitstellen kann, als wenn nur zwei Kolben vorgesehen sind.

Dabei sind der zumindest dritte und vierte Kolben in Richtung der Drehachse auf einer dem ersten und zweiten Kolben gegenüberliegenden Seite des elektromotorischen Teils angeordnet und um eine zweite Schwenkachse verschwenkbar.

Bei dieser Ausgestaltung ist somit der elektromotorische Teil in Sandwich-Bauweise zwischen den beiden Kolbenpaaren des Verbrennungsmotorteils aufgenommen, was eine insgesamt besonders kompakte Bauweise ermöglicht.

In einer bevorzugten Ausgestaltung ist das Gehäuse des Verbrennungsmotorteils im Wesentlichen halbkugelförmig und das Gehäuse des elektromotorischen Teils im Wesentlichen zylinderförmig ausgebildet.

Diese Maßnahme führt zu einer besonders kompakten Bauweise der erfindungsgemäßen Schwenkkolbenmaschine, da ein halbkugelförmiges Gehäuse an den Verbrennungsmotorteil der Schwenkkolbenmaschine optimal angepasst ist, während eine zylinderförmige Ausgestaltung des Gehäuses des elektromotorischen Teils an den elektromotorischen Teil optimal angepasst ist.

In einer weiter bevorzugten Ausgestaltung sind die Kolben bezüglich der Drehachse so angeordnet, dass die Drehachse durch die Arbeitskammer verläuft.

Diese Maßnahme stellt eine vorteilhafte Weiterbildung der bekannten Schwenkkölbenmaschine gemäß WO 03/067033 A1 dar, bei der die Arbeitskammer außerhalb der Drehachse angeordnet ist, das heißt die beiden Kolben der bekannten Schwenkkolbenmaschine stehen in ihrer OT-Stellung, in der das Volumen der Arbeitskammer minimal ist, senkrecht zur Drehachse. Dem gegenüber hat die vorstehend genannte Maßnahme den Vorteil, dass die auf die Kolben beim Umlaufen um die Drehachse wirkenden Fliehkräfte wegen der geringeren Beabstandung der Kolben von der Drehachse geringer sind und außerdem in Richtung des Auseinanderschwenkens der beiden Kolben wirken, das heißt die Fliehkräfte unterstützen den Arbeitstakt des Expandierens.

In einer weiteren bevorzugten Ausgestaltung ist konzentrisch zur Drehachse eine Welle angeordnet, die drehfest mit dem ersten und zumindest zweiten Kolben verbunden ist, und um die herum der Rotor des elektromotorischen Teils angeordnet ist.

Diese Maßnahme trägt ebenfalls vorteilhaft zu einer besonders kompakten Bauweise der erfindungsgemäßen Schwenkkolbenmaschine als Hybrid-Antrieb bei, da die mit dem ersten und zumindest zweiten Kolben drehfest verbundene Welle gleichzeitig die Welle bzw. das Lager des Rotors des elektromotorischen Teils übernimmt. Eine separate Lagerung des Rotors des elektromotorischen Teils ist somit nicht erforderlich, wodurch nicht nur eine kompakte Bauweise erreicht wird, sondern auch die Anzahl an Teilen der erfindungsgemäßen Schwenkkolbenmaschine gering gehalten wird.

In diesem Zusammenhang ist es weiterhin bevorzugt, wenn der elektromotorische Teil zumindest einen Elektromotor/-generator aufweist, dessen Rotor über einen Freilauf mit der Welle verbunden ist, so dass der Rotor auch bei stillstehender Welle um die Drehachse umlaufen kann.

Durch diese Maßnahme wird der Vorteil erzielt, dass die erfindungsgemäße Schwenkkolbenmaschine auch ausschließlich als Elektroantrieb arbeiten kann, das heißt ohne dass der Verbrennungsmotorteil in Betrieb ist. Bei Verwendung der erfindungsgemäßen Schwenkkolbenmaschine in einem Kraftfahrzeug kann dieses bei entsprechender Auslegung des Elektromotors beispielsweise im Stadtverkehr allein durch den Elektromotor angetrieben werden.

In einer weiteren bevorzugten Ausgestaltung ist parallel zur Drehachse und von dieser beabstandet eine Antriebs-/Abtriebswelle angeordnet, die über eine Getriebeanordnung mit dem Rotor des elektromotorischen Teils verbunden ist.

Die Getriebeanordnung kann beispielsweise aus einer Zahnradanordnung bestehen, indem an dem Rotor des elektromotorischen Teils eine Verzahnung vorgesehen, und auf der Antriebs-/ Abtriebswelle eine entsprechende Verzahnung oder ein Zahnrad angeordnet ist, so dass die Verzahnung der Antriebs-/Abtriebswelle mit der entsprechenden Verzahnung des Rotors des elektromotorischen Teils kämmt. An Stelle einer Zahnradanordnung kann die Getriebeanordnung auch einen Profilzahn-Riemenantrieb oder dergleichen aufweisen.

Die Anordnung der Antriebs-/Abtriebswelle parallel im Abstand zur Drehachse hat den Vorteil, dass die Antriebs-/Abtriebswelle nicht mit Teilen des Verbrennungsmotorteils wie Einlass- und Auslassstutzen sowie Zündkerzen, Einspritzdüsen und dergleichen kollidiert, so dass diese Teile vorteilhafterweise an der Stirnseite des Verbrennungsmotorteils in Verlängerung der Drehachse angeordnet werden können.

In einer weiteren bevorzugten Ausgestaltung steht die Antriebs-/Abtriebswelle über eine weitere Getriebeanordnung mit der Welle, mit der die Kolben drehfest verbunden sind, und über eine Kupplung in Wirkverbindung, die zwischen Freilauf und Kraftschluss umschaltschaltbar ist.

Hierdurch werden mit geringem konstruktivem Aufwand weitere Betriebsarten ermöglicht, nämlich bei laufendem Verbrennungsmotorteil kann durch Umschalten der Kupplung auf Kraftschluss gleichzeitig der elektromotorische Teil angetrieben werden, um über den Elektromotor/-generator Strom zu erzeugen, beispielsweise um elektrische Aggregate zu speisen oder die Fahrzeugbatterie zu laden. Die Kupplung wird auf Freilauf geschaltet, wenn nur der elektromotorische Antrieb genutzt werden soll, ohne dass der Verbrennungsmotorteil in Betrieb ist.

In einer weiteren bevorzugten Ausgestaltung weist der elektromotorische Teil einen Anlasser/Generator auf.

Der Anlasser/Generator ist vorzugsweise zusätzlich zu dem oben genannten Elektromotor/-generator im elektromotorischen Teil der Schwenkkolbenmaschine vorgesehen und gemäß einer weiteren bevorzugten Ausgestaltung ist der Rotor des Anlassers/Generators drehfest mit der Welle, mit der die Kolben drehfest verbunden sind, verbunden.

Zum Starten des Verbrennungsmotorteils der erfindungsgemäßen Schwenkkolbenmaschine wird der Anlasser/Generator mit Spannung beaufschlagt und wirft über die dabei in Rotation um die Drehachse versetzte Welle den Verbrennungsmotorteil der Schwenkkolbenmaschine an. Sobald der Verbrennungsmotorteil dann in Betrieb ist, wird der Anlasser/Generator bei laufendem Verbrennungsmotorteil permanent als Generator zur Stromerzeugung über die Welle angetrieben.

Vorzugsweise sind der zumindest dritte und vierte Kolben in einem halbkugelförmigen Gehäuseteil angeordnet.

Das gesamte Gehäuse der erfindungsgemäßen Schwenkkolbenmaschine weist in dieser Ausgestaltung vorzugsweise somit drei Gehäuseteile auf, die stirnseitig halbkugelförmig und im mittleren Bereich zylindrisch ausgebildet sind. Dies führt gegenüber der Schwenkkolbenmaschine gemäß WO 03/067033 A1, die ein insgesamt kugelförmiges Gehäuse aufweist, zu einer nur geringfügig größeren Bauweise mit dem Vorteil, dass die Schwenkkolbenmaschine auf platzsparende Weise mit einem elektromotorischen Teil als Hybrid-Antrieb ausgestaltet ist.

In einer weiteren bevorzugten Ausgestaltung sind der erste und zweite und der zumindest dritte und vierte Kolben in einem Kolbenkäfig gelagert, der in einem mittleren Bereich die Welle aufweist.

Diese Ausgestaltung führt weiterhin zu einer wenige Teile erfordernden Ausgestaltung der Schwenkkolbenmaschine als Hybrid-Antrieb, da der Kolbenkäfig an seinen beiden Enden die Kolben in entsprechenden Bohrungen bezüglich der Drehachse drehfest aufnimmt und mittig die Welle (Systemwelle) aufweist, die auch den elektromotorischen Teil trägt.

In einer weiteren bevorzugten Ausgestaltung weist die Welle eine trennbare Kupplung auf; so dass der zumindest dritte und vierte Kolben bei getrennter Kupplung nicht um die Drehachse umläuft, während der erste und zweite Kolben um die Drehachse umläuft.

Mit dieser Maßnahme wird der weitere Vorteil geschaffen, dass der Verbrennungsmotorteil wahlweise als Zwei-Kolben-Motor oder als Vier-Kolben-Motor betrieben werden kann.

Insgesamt wird durch die erfindungsgemäße Schwenkkolbenmaschine auf kleinstmöglichem Raum ein sogenannter Voll-Hybrid geschaffen, der gegenüber den herkömmlichen Hybriden neben der Raumersparnis auch eine Gewichtsersparnis ermöglicht.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Figur 1: eine Schwenkkolbenmaschine als Hybrid-Antrieb in einem perspektivischen Längsschnitt in einer Ebene entlang der Drehachse der drehbeweglichen Teile; und
- Figur 2: die Schwenkkolbenmaschine in Figur 1 in einem perspektivischen Längsschnitt entlang einer Ebene, die bezüglich der Schnittebene in Figur 1 um etwa 90° um die Drehachse gedreht ist.

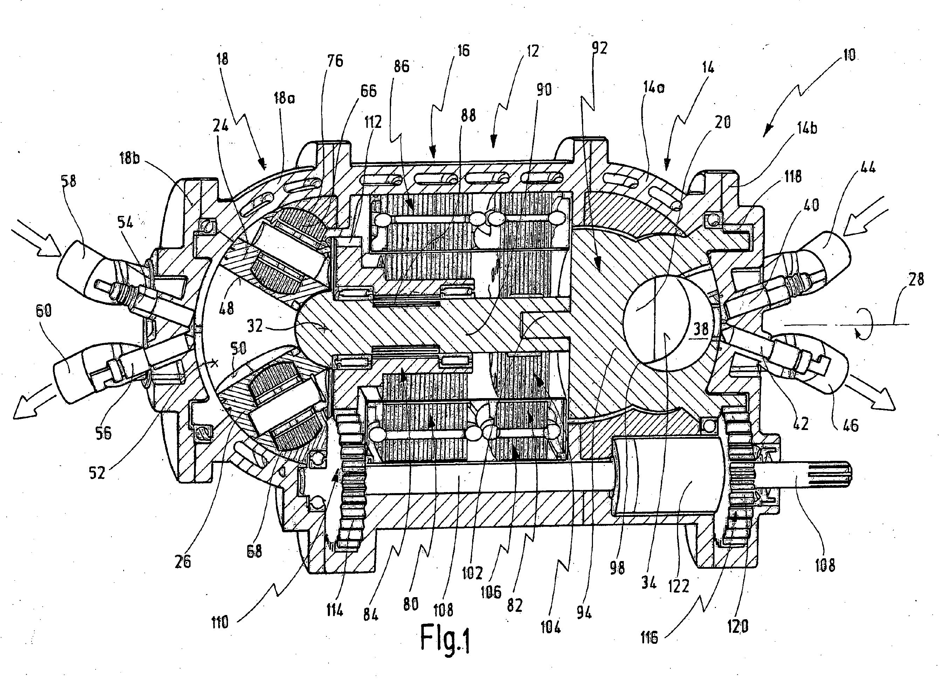

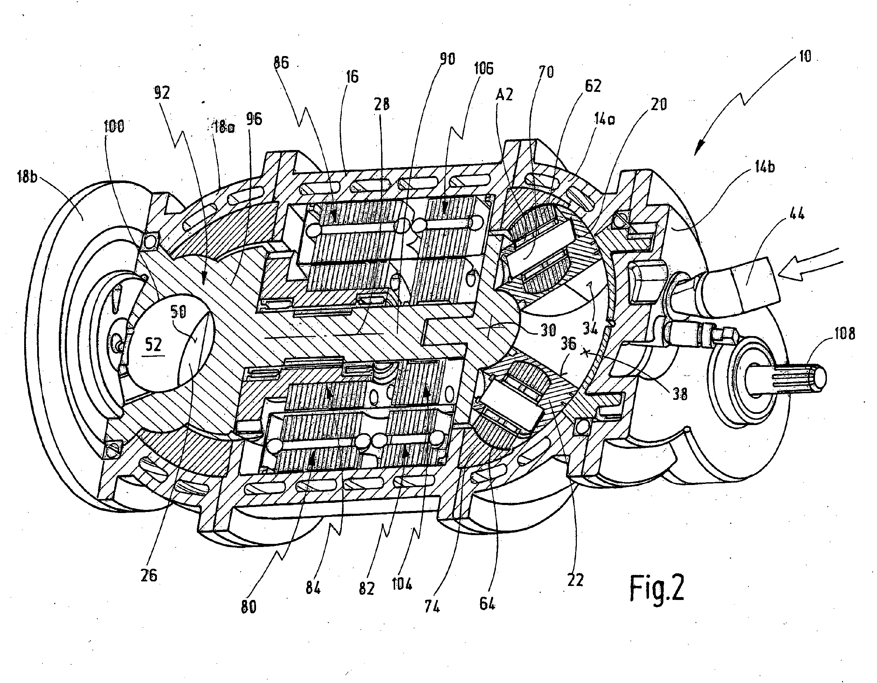

In Figuren 1 und 2 ist eine mit dem allgemeinen Bezugszeichen 10 versehene Schwenkkolbenmaschine dargestellt.

Die Schwenkkolbenmaschine 10 ist als Hybrid-Antrieb mit einem Verbrennungsmotorteil und einem elektromotorischen Teil ausgestaltet.

Die Schwenkkolbenmaschine 10 weist ein Gehäuse 12 auf, das durch ein erstes Gehäuseteil 14, ein mittleres zweites Gehäuseteil 16 und ein drittes Gehäuseteil 18 gebildet ist. Das erste Gehäuseteil 14 ist im Wesentlichen halbkugelförmig ausgebildet und weist ein erstes Gehäuseelement 14 a und ein zweites Gehäuseelement 14b auf, wobei letzteres als stirnseitiger Gehäusedeckel ausgebildet ist. In gleicher Weise ist das dritte Gehäuseteil 18 durch ein erstes Gehäuseelement 18a und ein zweites Gehäuseelement 18b gebildet, wobei letzteres wiederum als stirnseitiger Gehäusedeckel ausgebildet ist.

Die Gehäuseteile 14, 16 und 18 sind lösbar miteinander verbunden, vorzugsweise durch Schrauben.

Nachfolgend wird zunächst der Verbrennungsmotorteil der Schwenkkolbenmaschine 10 beschrieben.

Der Verbrennungsmotorteil der Schwenkkolbenmaschine 10 weist insgesamt vier Kolben auf, und zwar einen ersten Kolben 20, einen zweiten Kolben 22, einen dritten Kolben 24 und einen vierten Kolben 26. Der erste Kolben 20 und der zweite Kolben 22 sind in dem ersten Gehäuseteil 14 und der dritte Kolben 24 und der vierte Kolben 26 in dem dritten Gehäuseteil 18 angeordnet.

Die Kolben 20 bis 26 können in ihrem jeweiligen Gehäuseteil 14 bzw. 18 um eine gemeinsame gehäusefeste Drehachse 28, die als geometrische Achse zu verstehen ist, umlaufen. Wie später noch beschrieben wird, ist es jedoch ebenso möglich, dass die Umlaufbewegung der Kolben 20 und 22 von der Umlaufbewegung der Kolben 24 und 26 entkoppelt werden kann, das heißt die Schwenkkolbenmaschine 10 kann so betrieben werden, dass nur die Kolben 20 und 22 oder nur die Kolben 24 und 26 um die Drehachse 28 umlaufen, oder alle vier Kolben 20 bis 26 können gleichzeitig um die Drehachse 28 umlaufen.

Beim Umlaufen um die Drehachse 28 führen die Kolben 20 und 22 in dem Gehäuseteil 14 um eine erste Schwenkachse 30, die senkrecht auf der Drehachse 28 steht, hin- und hergehende Schwenkbewegungen aus, wobei die Schwenkbewegungen des ersten Kolbens 20 und des zweiten Kolbens 22 gegensinnig zueinander sind.

Der dritte Kolben 24 und der vierte Kolben 26 führen in dem Gehäuseteil 18 beim Umlaufen um die Drehachse 28 Schwenkbewegungen um eine zweite Schwenkachse 32 aus, die senkrecht zur Drehachse 28 und außerdem senkrecht zur ersten Schwenkachse 30 verläuft. Die Schwenkbewegungen des dritten Kolbens 24 und des vierten Kolbens 26 um die Schwenkachse 32 sind wiederum gegensinnig zueinander.

Bei dem gezeigten Ausführungsbeispiel führen somit die Kolben 20 und 22 Schwenkbewegungen aus, deren momentane Schwenkrichtung in einer Ebene erfolgt, die senkrecht zur entsprechenden Ebene ist, in der die momentane Schwenkrichtung des dritten und vierten Kolbens 24, 26 liegt. Diese um 90° versetzte Anordnung der Kolben 20 und 22 relativ zu den Kolben 24 und 26 ist jedoch nicht zwingend, sondern alle vier Kolben 20 bis 26 können auch so angeordnet werden, dass die Schwenkachsen 30 und 32 parallel zueinander verlaufen und die momentane Schwenkrichtung der Kolben 20 bis 26 stets in der gleichen Ebene liegt.

Der erste Kolben 20 weist eine erste Endfläche 34 und der zweite Kolben 22 eine zweite Endfläche 36 auf, die einander zugewandt sind und zusammen in Schwenkrichtung der Kolben 20 und 22 eine erste Arbeitskammer 38 begrenzen. Bei der hin- und hergehenden Schwenkbewegung der Kolben 20 und 22 verkleinert und vergrößert sich die Arbeitskammer 38 entsprechend. Die Arbeitskammer 38 dient als Brennraum für ein Luft-Brennstoff-Gemisch, wobei in der Arbeitskammer 38 durch die hin- und hergehende Schwenkbewegung der Kolben 20 und 22 die Takte des Einlassens und Verdichtens von Luft-Brennstoff-Gemisch, des Zündens des komprimierten Luft-Brennstoff-Gemisches, des Expandierens und Ausstoßens des verbrannten Luft-Brennstoff-Gemisches stattfinden. In Figur 2 ist die Arbeitskammer 38 in ihrem maximalen Volumen dargestellt, das heißt die Kolben 20 und 22 befinden sich in der sogenannten Unteren-Totpunkt-Stellung (UT-Stellung).

Der Arbeitskammer 38 ist eine Zünd- oder Glühkerze 40 zum Zünden des Luft-Brennstoff-Gemisches, eine Einspritzdüse 42 zum Einspritzen des Brennstoffes, ein Einlassstutzen 44 zum Einlassen von Verbrennungsluft und ein Auslassstutzen 46 zum Ausstoßen des verbrannten Luft-Brennstoff-Gemisches zugeordnet. Die Zünd- bzw. Glühkerze 40, die Einspritzdüse 42, der Einlassstutzen 44 und der Auslassstutzen 46 sind an dem stirnseitigen Gehäusedeckel 14b angeordnet.

In dem gezeigten Ausführungsbeispiel sind die Endflächen 34 und 36 kreisförmig ausgebildet, und die Arbeitskammer 38 weist die Form eines Rohrbogens konzentrisch zur ersten Schwenkachse 30 auf.

In entsprechender Weise weist der dritte Kolben 24 eine dritte Endfläche 48 und der vierte Kolben 26 eine vierte Endfläche 50 auf, die in Schwenkrichtung der Kolben 24 und 26 eine zweite Arbeitskammer 52 begrenzen. Der zweiten Arbeitskammer 52 ist ebenfalls in entsprechender Weise eine Zünd- oder Glühkerze 54, eine Einspritzdüse 56, ein Einlassstutzen 58 und ein Auslassstutzen 60 zugeordnet, die an dem stirnseitigen Gehäusedeckel 18b angeordnet sind. Die zweite Arbeitskammer 52 dient wie die Arbeitskammer 38 ebenfalls als Brennraum.

In der Zeichnung ist die Arbeitskammer 52 in ihrem maximalen Volumen dargestellt, das heißt die Kolben 24 und 26 befinden sich in ihrer UT-Stellung. Dies bedeutet, dass sich die Arbeitskammern 28 und 52 gleichsinnig zueinander vergrößern bzw. verkleinern, wenn die Kolben 20 und 22 bzw. 24 und 26 um die Drehachse 28 umlaufen und dabei ihre Schwenkbewegungen ausführen. Die gleichsinnige Vergrößerung und Verkleinerung der Arbeitskammern 38 und 52 ist bevorzugt, während auch eine gegensinnige Verkleinerung und Vergrößerung der Arbeitskammern 38 und 52 durch eine entsprechende andere Anordnung der Kolben 20 bis 26 vorgesehen sein kann.

Die Kolben 20 und 22 bzw. 24 und 26 sind jeweils so angeordnet, dass die Arbeitskammern 38 bzw. 52 auf der Drehachse 28 liegen bzw. die Drehachse 28 durch die Arbeitskammern 38 bzw. 52 hindurchgeht.

Um die Schwenkbewegung der Kolben 20 und 22 um die Schwenkachse 30 und der Kolben 24 und 26 um die Schwenkachse 32 aus deren Umlaufbewegung um die Drehachse 28 abzuleiten, ist ein entsprechender Steuermechanismus vorgesehen. Zu diesem Zweck weist der Kolben 20 ein Lauforgan 62, der Kolben 22 ein Lauforgan 64, der Kolben 24 ein Lauforgan 66 und der Kolben 26 ein Lauforgan 68 auf.

Da die Lauforgane 62 bis 68 untereinander baugleich sind, wird nachfolgend lediglich das Lauforgan 62 näher beschrieben, wobei diese Beschreibung in entsprechender Weise auch für die anderen Lauforgane 64 bis 68 zutrifft.

Das Lauforgan 62 ist als Laufrolle ausgebildet, die über einen Achszapfen 70 mit dem Kolben 20 verbunden, vorzugsweise lösbar verbunden ist. Die Laufrolle ist über ein Präzisions-Nadellager 72 auf dem Achszapfen 70 drehbar gelagert.

An Stelle der Ausbildung des Lauforgans 62 als Laufrolle kann das Lauforgan 62 auch in Form einer Vollkugel ausgebildet sein, die frei drehbar in einer entsprechenden Kugelpfanne auf der Rückseite des Kolbens 20 gelagert sein kann.

Das Lauforgan 62 und das Lauforgan 64 laufen in einer Steuerkurve, die einen gewellten Verlauf mit Wellentälern und Wellenbergen aufweist, und die an einem Kurvenglied 74 ausgebildet ist. Ein entsprechendes Kurvenglied 76 mit Steuerkurve ist für die Laufglieder 66 und 68 der Kolben 24 und 26 vorgesehen. Die Kurvenglieder 74 und 76 sind auf der Innenseite der Gehäuseteile 14 bzw. 18 angeordnet. An Stelle zusätzlicher Kurvenglieder 74 und 76 kann die entsprechende Steuerkurve auch als Nut in die Gehäuseteile 14 bzw. 18 eingebracht sein.

Zur Erhöhung der Leistung des Verbrennungsmotorteils können die der Arbeitskammer 38 bzw. 52 abgewandten rückseitigen Kammern (nicht dargestellt) als Vordruckräume dienen, in denen die Verbrennungsluft vorkomprimiert und dann unter erhöhtem Druck in die Arbeitskammer 38 bzw. 52 eingeleitet wird.

Nachfolgend wird nun der elektromotorische Teil der Schwenkkolbenmaschine 10 näher beschrieben.

Der elektromotorische Teil ist in dem zweiten Gehäuseteil 16 aufgenommen, das im Wesentlichen eine zylindrische Geometrie aufweist. Der elektromotorische Teil schließt sich an den durch die Kolben 20 und 22 gebildeten Teil des Verbrennungsmotorteils der Schwenkkolbenmaschine 10 in Richtung der Drehachse 28 unmittelbar an, und an den elektromotorischen Teil in dem Gehäuse 16 schließt sich dann unmittelbar der weitere Teil des Verbrennungsmotorteils mit den Kolben 24 und 26 an.

Der elektromotorische Teil weist einen Elektromotor/-generator 80 auf. Der Elektromotor/-generator kann, wie später noch beschrieben wird, wahlweise als elektromotorischer Antrieb oder als Elektrogenerator zur Stromerzeugung betrieben werden.

Der elektromotorische Teil weist weiterhin einen elektrischen Anlasser/Generator 82 auf, der wahlweise als Anlasser für den Verbrennungsmotorteil und wahlweise als (weiterer) Elektrogenerator zur Stromerzeugung betrieben werden kann.

Der Elektromotor/-generator weist einen Rotor 84 und einen Stator 86 auf. Der Rotor 84 des Elektromotors/-generators 80 ist über einen Freilauf 88 mit einer Welle 90 verbunden, so dass der Rotor 84 auch bei stillstehender Welle 90 um die Drehachse 28 umlaufen kann.

Die Welle 90 ist Teil eines Kolbenkäfigs 92, der neben der Welle 90 stirnseitig jeweils ein Kolbenaufnahmeelement 94 für die Kolben 20 und 22 bzw. ein Kolbenaufnahmeelement 96 für die Kolben 24 und 26 aufweist. Über die Kolbenaufnahmeelemente 94 und 96 sind die Kolben 20, 22 bzw. 24, 26 drehfest mit der Welle 90 verbunden. In dem Kolbenaufnahmeelement 94 ist eine Bohrung 98 vorhanden, in der die Kolben 20 und 22 den Schwenkbewegungen entsprechend gleitend, jedoch mit entsprechender Abdichtung, gelagert sind. Die Bohrung 98 ist entsprechend der geometrischen Form der Endflächen 34 und 36 im Querschnitt bzw. kreisförmig ausgebildet.

In dem Kolbenaufnahmeelement 96 ist eine entsprechende Bohrung 100 für die gleitende Lagerung der Kolben 24 und 26 vorhanden. Die Wandungen Bohrungen 98 und 100 begrenzen die Arbeitskammer 38 bzw. 52 in deren jeweiliger Umfangsrichtung. Über die Aufnahme der Kolben 20 und 22 in der Bohrung 98 und der Kolben 24, 26 in der Bohrung 100 sind die Kolben 20 bis 26 drehfest mit der Welle 90 verbunden.

Der Kolbenkäfig 92 ist in dem gezeigten Ausführungsbeispiel aus Gründen der einfacheren Montage zweiteilig ausgebildet, indem das Kolbenaufnahmeelement 94 mit dem Kolbenaufnahmeelement 96 bzw. der Welle 90 über eine drehfeste Steckverbindung 102 verbunden ist.

Der Anlasser/Generator 82 weist ebenfalls einen Rotor 104 und einen Stator 106 auf, wobei im Unterschied zu dem Rotor 84 des Elektromotors/-generators 80 der Rotor 104 vorzugsweise drehfest mit der Welle 90 verbunden ist.

Die Statoren 86 und 106 sind bezüglich des mittleren Gehäuseteils 16 gehäusefest.

Die Schwenkkolbenmaschine 10 weist weiterhin eine Antriebs-/ Abtriebswelle 108 auf.

Die Antriebs-/Abtriebswelle 108 ist parallel zur Drehachse 28 mit seitlichem Abstand zu dieser angeordnet, wie insbesondere aus Figur 2 hervorgeht.

Die Antriebs-/Abtriebswelle 108 ist über eine erste Getriebeanordnung 110 mit dem Rotor 84 des Elektromotors/-generators verbunden. Dazu weist der Rotor 84 eine Außenverzahnung 112 und die Antriebs-/Abtriebswelle 108 ein mit der Außenverzahnung 112 kämmendes Zahnrad 114 auf.

Die Antriebs-/Abtriebswelle 108 ist über eine weitere Getriebeanordnung 116 mit der Welle 90 verbunden. Dazu weist das mit der Welle 90 verbundene Kolbenaufnahmeelement 94 eine Außenverzahnung 118 auf, die mit einem Zahnrad 120 auf der Antriebs-/ Abtriebswelle 108 kämmend in Eingriff steht.

Die Getriebeanordnungen 110 bzw. 116 können an Stelle von Zahnradgetrieben auch durch Riemen- oder Kettenantriebe realisiert sein.

Die Antriebs-/Abtriebswelle 108 kann jedoch von der Welle 90 entkoppelt werden, so dass bei drehender Antriebs-/Abtriebswelle 108 keine Übertragung der Drehbewegung auf die Welle 90 und damit die Kolben 20 bis 26 erfolgt. Dazu ist eine Kupplung 122 auf der Antriebs-/Abtriebswelle 108 vorgesehen, die zwischen Freilauf und Kraftschluss umschaltbar ist und mit der das Zahnrad 120 verbunden ist. Wenn die Kupplung 122 auf Kraftschluss geschaltet ist, führt eine Drehung der Antriebs-/Abtriebswelle 108 auch zu einer Drehung des Zahnrades und damit der Kolben 20 bis 26 um die Drehachse 28.

Nachfolgend werden die Funktionsweise der Schwenkkolbenmaschine 10 und ihre möglichen Betriebsarten beschrieben.

Zum Starten des Verbrennungsmotorteils der Schwenkkolbenmaschine 10 wird der Anlasser/Generator 82 entsprechend aktiviert. Eine Drehung des Rotors 104 des Anlassers/Generators 82 versetzt die Welle 90 in Drehung um die Drehachse 28, wodurch über den Kolbenkäfig 92 die Kolben 20 bis 26 in Umlaufbewegung um die Drehachse 28 versetzt werden. In den Arbeitskammern 38 und 52 laufen dann die Arbeitstakte des Verbrennungsmotors, nämlich Einlassen, Verdichten, Zünden, Expandieren und Ausstoßen ab. Die Schwenkkolbenmaschine 10 arbeitet dann als Brennkraftmaschine.

Über die Getriebeanordnung 116 wird die Umlaufbewegung der Kolben 20 bis 26 um die Drehachse 28 in eine entsprechende Drehung der Antriebs-/Abtriebswelle 108 umgesetzt. Während dieses Betriebes ist die Kupplung 122 auf Kraftschluss geschaltet, und die Antriebs-/Abtriebswelle 108 treibt über die Getriebeanordnung 110 den Rotor 84 des Elektromotors/-generators 80 an. Der Elektromotor/-generator arbeitet nun als Generator zur Stromerzeugung, beispielsweise zum Versorgen elektrischer Aggregate und zum Aufladen der Batterie des Fahrzeuges, in dem die Schwenkkolbenmaschine 10 verwendet wird.

Der Rotor 104 des Anlassers/Generators 82 läuft stets mit der Welle 90 um die Drehachse 28 um, so dass der Anlasser/Generator 82 während des Betriebs der Schwenkkolbenmaschine 10 als Brennkraftmaschine ebenfalls als Generator zur Stromerzeugung arbeitet.

Des Weiteren kann die Schwenkkolbenmaschine 10 auch ausschließlich als Elektroantrieb betrieben werden.

Dazu wird der Elektromotor/-generator 80 mit Spannung beaufschlagt, so dass der Rotor 84 des Elektromotor/-generators 80 um die Drehachse 28 umläuft. Da der Rotor 84 über den Freilauf 88 drehbar mit der Welle 90 verbunden ist, wird die Welle 90 durch die Rotation des Rotors 84 nicht in Drehung um die Drehachse 28 versetzt. Die Drehbewegung des Rotors 84 um die Drehachse 28 wird über die Getriebeanordnung 110 auf die Antriebswelle 108 übertragen, während die Kupplung 122 auf Freilauf geschaltet ist, so dass das Zahnrad 120 stillsteht und keine Umlaufbewegung der Kolben 20 bis 26 um die Drehachse 28 erzeugt.

Bei der Schwenkkolbenmaschine 10 kann zusätzlich vorgesehen sein, dass in einem weiteren Betriebsmodus, bei dem die Schwenkkolbenmaschine 10 als Brennkraftmaschine arbeitet, nur die Kolben 20 und 22 um die Drehachse 28 umlaufen und die Antriebsenergie erzeugen, während die Kolben 24 und 26 stillstehen. Dies kann durch eine weitere Kupplung im Bereich der Welle 90 realisiert werden, die beispielsweise geöffnet und geschlossen werden kann, um den Kraftschluss in der Welle 90 zu unterbrechen. Auf diese Weise kann die Schwenkkolbenmaschine wahlweise als 2- oder 4-Kolbenmotor betrieben werden.

## Patentansprüche

1. Schwenkkolbenmaschine, mit einem Verbrennungsmotorteil, der ein Gehäuseteil (14) aufweist, in dem ein erster und zumindest ein zweiter Kolben (20, 22) angeordnet sind, die gemeinsam in dem Gehäuseteil (14) um eine gehäusefeste Drehachse (28) umlaufen können, und die beim Umlaufen um die Drehachse (28) um eine senkrecht zur Drehachse (28) verlaufende Schwenkachse (30) zueinander gegensinnige hin- und hergehende Schwenkbewegungen ausführen, wobei der erste Kolben (20) eine erste Endfläche (34) und der zumindest zweite Kolben (22) eine der ersten Endfläche (34) zugewandte zweite Endfläche (36) aufweist, wobei die Endflächen (34, 36)in Schwenkrichtung der Kolben (20, 22) eine Arbeitskammer (38) begrenzen, wobei der Verbrennungsmotorteil zumindest einen dritten und vierten verschwenkbaren Kolben (24, 26) aufweist, die um die Drehachse (28) umlaufen können und eine zweite Arbeitskammer (52) bilden, **dadurch gekennzeichnet, dass** sich an den Verbrennungsmotorteil in Richtung der Drehachse (28) ein elektromotorischer Teil anschließt, der zumindest einen Rotor (84, 104) aufweist, der konzentrisch zur Drehachse (28) angeordnet ist, und der in einem sich an das Gehäuseteil (14) des Verbrennungsmotorteils anschließenden Gehäuseteil (16) angeordnet ist, und dass der zumindest dritte und vierte Kolben (24, 26) in Richtung der Drehachse (28) auf einer dem ersten und zweiten Kolben (20, 22) gegenüberliegenden Seite des elektromotorischen Teils angeordnet sind und um eine zweite Schwenkachse (32) verschwenkbar sind.

2. Schwenkkolbenmaschine nach Anspruch 1, **dadurch gekennzeichnet, dass** das Gehäuseteil (14) des Verbrennungsmotorteils, in dem der erste und der zumindest eine zweite Kolben (20, 22) angeordnet sind, halbkugelförmig und das Gehäuseteil (16) des elektromotorischen Teils zylinderförmig ausgebildet ist.

3. Schwenkkolbenmaschine nach Anspruch 1 oder 2, **dadurch gekennzeichnet, dass** die Kolben (20, 22, 24, 26) bezüglich der Drehachse (28) so angeordnet sind, dass die Drehachse (28) durch die Arbeitskammer (38, 52) verläuft.

4. Schwenkkolbenmaschine nach einem der Ansprüche 1 bis 3, **dadurch gekennzeichnet, dass** konzentrisch zur Drehachse (28) eine Welle angeordnet (90) ist, die drehfest mit dem ersten und zumindest zweiten Kolben (20, 22) verbunden ist, und um die herum der zumindest eine Rotor (84, 104) des elektromotorischen Teils angeordnet ist

5. Schwenkkolbenmaschine nach Anspruch 4, **dadurch gekennzeichnet, dass** der elektromotorische Teil zumindest einen Elektromotor/-generator (80) aufweist, dessen Rotor (84) über einen Freilauf mit der Welle verbunden (90) ist, so dass der Rotor (84) auch bei stillstehender Welle (90) um die Drehachse (28) umlaufen kann.

6. Schwenkkolbenmaschine nach einem der Ansprüche 1 bis 5, **dadurch gekennzeichnet, dass** parallel zur Drehachse (28) und von dieser beabstandet eine Antriebs-/Abtriebswelle (108) angeordnet ist, die über eine Getriebeanordnung (110) mit dem Rotor (84, 104) des elektromotorischen Teils verbunden ist.

7. Schwenkkolbenmaschine nach Anspruch 4 und 6, **dadurch gekennzeichnet, dass** die Antriebs-/Abtriebswelle (108) über eine weitere Getriebeanordnung (116) mit der Welle (90), mit der der erste und zumindest zweite Kolben (20, 22) drehfest verbunden sind, und über eine Kupplung (122) in Wirkverbindung steht, die zwischen Freilauf und Kraftschluss umschaltbar ist.

8. Schwenkkolbenmaschine nach einem der Ansprüche 1 bis 7, **dadurch gekennzeichnet, dass** der elektromotorische Teil einen Anlassgenarator (82) aufweist.

9. Schwenkkolbenmaschine nach Anspruch 4 und 8, **dadurch gekennzeichnet, dass** der Rotor (104) des Anlassgenerators (82) drehfest mit der Welle (90), mit der der erste und zumindest zweite Kolben (20, 22) drehfest verbunden sind, verbunden ist.

10. Schwenkkolbenmaschine nach einem der Ansprüche 1 bis 9, **dadurch gekennzeichnet, dass** der zumindest dritte und vierte Kolben (24, 26) in einem weiteren halbkugelförmigen Gehäuseteil (18) angeordnet sind.

11. Schwenkkolbenmaschine nach Anspruch 4, **dadurch gekennzeichnet, dass** der erste und zweite und der zumindest dritte und vierte Kolben (20 - 26) in einem Kolbenkäfig (92) gelagert sind, der in einem mittleren Bereich die Welle (90) aufweist.

12. Schwenkkolbenmaschine nach Anspruch 11, **dadurch gekennzeichnet, dass** die Welle (90) eine trennbare Kupplung aufweist, so dass der zumindest dritte und vierte Kolben (24, 26) bei getrennter Kupplung nicht um die Drehachse (28) umläuft, während der erste und zweite Kolben (20, 22) um die Drehachse (28) umlaufen.

## Claims

1. Oscillating piston engine, comprising an internal combustion engine part having a housing part (14) in which there are arranged a first and at least a second piston (20, 22) which can jointly revolve in the housing part (14) about an axis of rotation (28) fixed in relation to the housing and which, when revolving about the axis of rotation (28), perform reciprocating oscillating movements in opposition to one another about an axis of oscillation (30) extending perpendicularly to the axis of rotation (28), the first piston (20) having a first end face (34) and the at least second piston (22) having a second end face (36) facing the first end face (34), the end faces (34, 36) delimiting a working chamber (38) in the direction of oscillation of the pistons (20, 22), wherein the internal combustion engine part has at least a third and fourth pivotable pistons (24, 26) which can revolve about the axis of rotation (28) and form a second working chamber (52), **characterized in that** the internal combustion engine part is adjoined in the direction of the axis of rotation (28) by an electromotive part having at least one rotor (84, 104) which is arranged concentrically with the axis of rotation (28) and which is arranged in a housing part (16) adjoining the housing part (14) of the internal combustion engine part, and that the at least third and fourth pistons (24, 26) are arranged in the direction of the axis of rotation (28) on a side of the electromotive part that opposes the first and second piston (20, 22) and are pivotable about a second axis of oscillation (32).

2. Oscillating piston engine according to Claim 1, **characterized in that** the housing part (14) of the internal combustion engine part is substantially hemispherical and the housing part (16) of the electromotive part substantially cylindrical in its configuration.

3. Oscillating piston engine according to Claim 1 or 2, **characterized in that** the pistons (20, 22, 24, 26) are arranged with respect to the axis of rotation (28) in such a way that the axis of rotation (28) extends through the working chamber (38, 52).

4. Oscillating piston engine according to any one of Claims 1 to 3, **characterized in that** a shaft (90), which is connected to the first and at least second piston (20, 22) in rotatably fixed manner and around which the at least one rotor (84, 104) of the electromotive part is arranged, is arranged concentrically with the axis of rotation (28).

5. Oscillating piston engine according to Claim 4, **characterized in that** the electromotive part has at least one electric motor/generator (80), the rotor (84) of which is connected to the shaft (90) via a free wheel, so that the rotor (84) can revolve about the axis of rotation (28) even when the shaft (90) is stationary.

6. Oscillating piston engine according to any one of Claims 1 to 5, **characterized in that** a drive/output shaft (108), which is connected to the rotor (84, 104) of the electromotive part via a transmission arrangement (110), is arranged parallel to and set apart from the axis of rotation (28).

7. Oscillating piston engine according to Claims 4 and 6, **characterized in that** the drive/output shaft (108) is operatively connected via a further transmission arrangement (116) to the shaft (90), to which the pistons (20, 22) are connected in rotatably fixed manner, and via a clutch (122) which can be switched over between free-wheeling and frictional connection.

8. Oscillating piston engine according to any one of Claims 1 to 7, **characterized in that** the electromotive part has a starter generator (82).

9. Oscillating piston engine according to Claims 4 and 8, **characterized in that** the rotor (104) of the starter generator (82) is connected to the shaft (90) in rotatably fixed manner to which the pistons (20, 22) are connected in rotatably fixed manner.

10. Oscillating piston engine according to any one of Claims 1 to 9, **characterized in that** the at least third and fourth pistons (24, 26) are arranged in a further hemispherical housing part (18).

11. Oscillating piston engine according to Claim 4, **characterized in that** the first and second and the at least third and fourth pistons (20 - 26) are mounted in a piston cage (92) having in a central region the shaft (90).

12. Oscillating piston engine according to Claim 11, **characterized in** the shaft (90) has a separable clutch so that, when the clutch is separated, the at least third and fourth piston (24, 26) does not revolve about the axis of rotation (28), whereas the first and second pistons (20, 22) revolve about the axis of rotation (28).

## Revendications

1. Machine à pistons oscillants, comprenant un élément moteur à combustion interne, qui présente un élément carter (14), dans lequel sont disposés un premier et au moins un deuxième piston (20, 22), lesquels peuvent tourner ensemble dans l'élément carter (14) autour d'un axe de rotation (28) solidaire du carter et effectuent, lors de la révolution autour de l'axe de rotation (28), des mouvements de pivotement de va-et-vient en sens inverse les uns par rapport aux autres autour d'un axe de pivotement (30) s'étendant de manière perpendiculaire par rapport à l'axe de rotation (28), sachant que le premier piston (20) présente une première face d'extrémité (34) et que l'au moins deuxième piston (22) présente une deuxième face d'extrémité (36) opposée à la première face d'extrémité (34), sachant que les faces d'extrémité (34, 36) délimitent, dans la direction de pivotement des pistons (20, 22), une chambre de travail (38), sachant que l'élément moteur à combustion interne présente au moins des troisième et quatrième pistons (24, 26) pouvant pivoter, lesquels peuvent tourner autour de l'axe de rotation (28) et forment une deuxième chambre de travail (52), **caractérisée en ce que** se raccorde à l'élément moteur à combustion interne, en direction de l'axe de rotation (28), un élément électromoteur, qui présente au moins un rotor (84, 104) disposé de manière concentrique par rapport à l'axe de rotation (28) et qui est disposé dans un élément carter (16) se raccordant à l'élément carter (14) de l'élément moteur à combustion interne, et **en ce que** les au moins troisième et quatrième pistons (24, 26) sont disposés, en direction de l'axe de rotation (28), sur un côté, opposé aux premier et deuxième pistons (20, 22), de l'élément électromoteur et peuvent pivoter autour d'un deuxième axe de pivotement (32).

2. Machine à pistons oscillants selon la revendication 1, **caractérisée en ce que** l'élément carter (14) de l'élément moteur à combustion interne, dans lequel sont disposés le premier et l'au moins un deuxième piston (20, 22), est réalisé de manière à présenter une forme de demi-sphère et l'élément carter (16) de l'élément électromoteur est réalisé de manière à présenter une forme de cylindre.

3. Machine à pistons oscillants selon la revendication 1 ou 2, **caractérisée en ce que** les pistons (20, 22, 24, 26) sont disposés par rapport à l'axe de rotation (28) de telle manière que l'axe de rotation (28) s'étend à travers la chambre de travail (38, 52).

4. Machine à pistons oscillants selon l'une quelconque des revendications 1 à 3, **caractérisée en ce qu'**est disposé de manière concentrique par rapport à l'axe de rotation (28) un arbre (90), qui est relié de manière solidaire en rotation aux premier et au moins deuxième pistons (20, 22) et autour duquel est disposé l'au moins un rotor (84, 104) de l'élément électromoteur.

5. Machine à pistons oscillants selon la revendication 4, **caractérisée en ce que** l'élément électromoteur présente au moins un générateur/moteur électrique (80), dont le rotor (84) est relié par l'intermédiaire d'une roue libre à l'arbre (90) de telle sorte que le rotor (84) peut tourner autour de l'axe de rotation (28) même lorsque l'arbre (90) est à l'arrêt.

6. Machine à pistons oscillants selon l'une quelconque des revendications 1 à 5, **caractérisée en ce qu'**est disposé, de manière parallèle à l'axe de rotation (28) et à distance de celui-ci, un arbre d'entraînement/de sortie (108), qui est relié, par l'intermédiaire d'un ensemble d'engrenage (110), au rotor (84, 104) de l'élément électromoteur.

7. Machine à pistons oscillants selon la revendication 4 et 6, **caractérisée en ce que** l'arbre d'entraînement/de sortie (108) se trouve en liaison fonctionnelle par l'intermédiaire d'un ensemble d'engrenage (116) supplémentaire avec l'arbre (9), auquel sont reliés de manière solidaire en rotation les premier et au moins deuxième pistons (20, 22), et par l'intermédiaire d'un système de couplage (122), qui peut être commuté en alternance en roue libre et à force.

8. Machine à pistons oscillants selon l'une quelconque des revendications 1 à 7, **caractérisée en ce que** l'élément électromoteur présente un générateur de recuit (82).

9. Machine à pistons oscillants selon la revendication 4 et 8, **caractérisée en ce que** le rotor (104) du générateur de recuit (82) est relié de manière solidaire en rotation à l'arbre (90), auquel sont reliés de manière solidaire en rotation les premier et au moins deuxième pistons (20, 22).

10. Machine à pistons oscillants selon l'une quelconque des revendications 1 à 9, **caractérisée en ce que** les au moins troisième et quatrième pistons (24, 26) sont disposés dans un élément de carter (18) supplémentaire présentant une forme de demi-sphère.

11. Machine à pistons oscillants selon la revendication 4, **caractérisée en ce que** les premier et deuxième et les au moins troisième et quatrième pistons (20 à 26) sont logés dans une cage de piston (92), qui présente, dans une zone centrale, l'arbre (90).

12. Machine à pistons oscillants selon la revendication 11, **caractérisée en ce que** l'arbre (90) présente un système de couplage pouvant être retiré, de telle sorte que les au moins troisième et quatrième pistons (24, 26) ne tournent pas autour de l'axe de rotation (28) lorsque le système de couplage est retiré, tandis que les premier et deuxième pistons (20, 22) tournent autour de l'axe de rotation (28).
